# EUROPÄISCHE PATENTSCHRIFT

(11) **EP 2 394 877 B1**
(45) Veröffentlichungstag und Bekanntmachung des Hinweises auf die Patenterteilung: **17.10.2018**
(21) Anmeldenummer: 10005948.4
(22) Anmeldetag: 09.06.2010
(51) Int. Cl.: B61D 5/00

(54) **Übergangsplattform für ein Fahrzeuggelenk**
Bridging platform for a vehicle joint
Installation et procédé de réglage d'un flux de liquide

(43) Veröffentlichungstag der Anmeldung: 14.12.2011
(73) Patentinhaber: ATG Autotechnik GmbH, 22962 Siek (DE)
(72) Erfinder: Browne, Denis, 22946 Trittau (DE)
(74) Vertreter: Glawe, Delfs, Moll

(56) Entgegenhaltungen:
- EP-A1- 0 240 407
- DE-A1- 4 138 921
- DE-A1- 4 329 674
- DE-U1-202006 007 377

## Beschreibung

Die Erfindung betrifft eine Übergangsplattform, die dazu bestimmt ist, über einem Fahrzeuggelenk mit einer Neigung in Längsrichtung angeordnet zu werden. Die Übergangsplattform umfasst eine Drehplatte und eine Anschlussplatte, wobei die Drehplatte und die Anschlussplatte durch ein in Querrichtung ausgerichtetes Scharnier miteinander verbunden sind. Die Anschlussplatte weist eine sich vom seitlichen Rand in Richtung einer Mittelachse erstreckende Fuge auf.

Fahrzeuge, wie beispielsweise Straßenbahnen, bestehen häufig aus mehreren Wagen, die über Fahrzeuggelenke miteinander verbunden sind. Das Fahrzeuggelenk ermöglicht Relativbewegungen zwischen den Wagen, wobei neben Drehbewegungen häufig auch Nickbewegungen und Wankbewegungen möglich sind. Die Verbindung zwischen den Wagen ist regelmäßig so gestaltet, dass die Passagiere während der Fahrt von einem zum nächsten Wagen wechseln können. Über dem Fahrzeuggelenk ist dazu eine Übergangsplattform angeordnet, auf der die Passagiere sich bewegen können. Um den Durchgang herum erstreckt sich normalerweise ein Faltenbalg, der die Passagiere vor Umgebungseinflüssen schützt.

Wenn die Übergangsplattform geneigt über dem Fahrzeuggelenk angeordnet ist, führt bereits eine einfache Drehbewegung in dem Fahrzeuggelenk (zu der es kommt, wenn das Fahrzeug in der Ebene um eine Kurve fährt) dazu, dass die Übergangsplattform sich verwindet. Die Verwindung wird noch verstärkt, wenn parallel zu der Drehbewegung auch Wankbewegungen zwischen den Wagen stattfinden.

Der Erfindung liegt ausgehend von diesem Stand der Technik die Aufgabe zu Grunde, eine Übergangsplattform vorzustellen, die kostengünstig herzustellen ist und die im Betrieb des Fahrzeugs auftretenden Verwindungen zuverlässig aufnimmt. Die Aufgabe wird gelöst durch die Merkmale des Anspruchs 1. Vorteilhafte Ausführungsformen finden sich in den Unteransprüchen. Erfindungsgemäß besteht die Drehplatte aus einem halbsteifen Material. Es ist eine verwindungsstarre Fugenverbindung vorgesehen.

Zunächst werden einige Begriffe erläutert. Die Anschlussplatte der Übergangsplattform ist dazu bestimmt, an einen angrenzenden Wagen angeschlossen zu werden. Die Verbindung zu dem angrenzenden Wagen ist in der Hinsicht fest, dass die Anschlussplatte unabhängig von der Stellung des Fahrzeuggelenks immer in der Verlängerung des betreffenden Wagens liegt. Andere Bewegungen wie beispielsweise Schwenkbewegungen um eine horizontale Querachse oder Verschiebebewegungen zwischen der Anschlussplatte und dem Wagen können gegebenenfalls möglich sein. Die Fuge definiert einen Bereich der Anschlussplatte, in dem die Anschlussplatte leicht geknickt werden kann. Normalerweise erstreckt sich von beiden Seiten der Anschlussplatte eine Fuge in Richtung Mittelachse.

Die Drehplatte der Übergangsplattform ist dazu bestimmt drehbar gegenüber dem anderen an das Fahrzeuggelenk angrenzenden Wagen gelagert zu werden. Bei einer Drehbewegung im Fahrzeuggelenk dreht sich dieser Wagen um die Drehplatte herum. Die Drehplatte und die Anschlussplatte bilden zusammen einen Bereich der Übergangsplattform, auf dem die Passagiere stehen können. Über das Scharnier, mit dem die Anschlussplatte und die Drehplatte verbunden sind, kann die Übergangsplattform in sich einknicken.

Ein Material wird dann als halbsteif bezeichnet, wenn es ausreichend stabil ist, so dass Personen auf der aus diesem Material gebildeten Platte stehen können. Andererseits ist das Material so flexibel, dass eine aus diesem Material gebildete Platte sich unter den Kräften, die bei einer Drehbewegung zwischen den Wagen auftreten, verwindet. Die Verwindung ist elastisch, die Platte nimmt also wieder ihren Ausgangszustand ein, wenn die Drehbewegung rückgängig gemacht wird.

Von einer Verwindung der Übergangsplattform wird gesprochen, wenn ein weiter vorne liegender Abschnitt relativ zu einem weiter hinten liegenden Abschnitt der Übergangsplattform um eine Längsachse verdreht wird. Eine Fugenverbindung wird als verwindungsstarr bezeichnet, wenn eine Verwindung in der Übergangsplattform nicht dazu führt, dass sich die beiden an die Fuge angrenzenden Kanten relativ zueinander verwinden. Möglich bei einer verwindungsstarren Verbindung ist eine Schwenkbewegung bzw. Knickbewegung um die Längsachse der Fuge.

Mit der Erfindung wird vorgeschlagen, die komplexe Bewegung, die von der Übergangsplattform aufgenommen werden muss, aufzuteilen in einen Anteil, der von der halbsteifen Drehplatte aufgenommen wird, und einen Anteil, der in Form einer Knickbewegung an den Fugen aufgenommen wird. Dadurch wird es möglich, die Fugenverbindung so zu gestalten, dass sie auf einfache Bewegungen beschränkt ist. Indem die Fugenverbindung verwindungsstarr ist, verwinden sich die an die an die Kante angrenzenden Fugen nicht relativ zueinander und es können sich folglich keine Absätze bilden, über die die Passagiere stolpern könnten. Die definierte Verbindung an der Fuge, die frei von Absätzen ist, unterscheidet die Erfindung insbesondere von Lösungen, wie sie aus EP 1 854 691 oder DE 94 13 285 bekannt sind. Durch die DE 20 2006 007 377 U1 ist eine Übergangsplatform bekannt, die dazu bestimmt ist, über einem Fahrzeuggelenk mit einer Neigung in Längsrichtung angeordnet zu werden, umfassend eine Drehplatte und eine Anschlussplatte, welche eine sich vom seitlichen Rand in Richtung einer Mittelachse erstreckende Fuge aufweist.

Die Fugenverbindung ist vorzugsweise so gestaltet, dass sie auch gegenüber parallel zur Anschlussplatte wirkenden Zugkräften und Druckkräften starr ist. Insbesondere kann die Bewegungsfreiheit zwischen den an die Fuge angrenzenden Kanten auf Knickbewegungen um die Längsachse der Fuge beschränkt sein. In einer vorteilhaften Ausführungsform ist ein sich über die Fuge hinweg erstreckendes Federblech für die Fugenverbindung vorgesehen. Das Federblech kann beidseits entlang der Fuge mit der Anschlussplatte verbunden sein. Das Federblech verformt sich elastisch unter den Knickbewegungen der Fuge und lässt im Übrigen keine Verschiebung oder Verwindung zwischen den an die Fuge angrenzenden Kanten zu.
Die Passagiere können auch im Bereich der Fugen auf der Übergangsplattform stehen. Um zu verhindern, dass die Übergangsplattform sich im Bereich der Fugen unter dieser Last nach unten durchbiegt, kann die Fugenverbindung einen Anschlag aufweisen, der einem Durchhängen nach unten entgegenwirkt.

Auch die Anschlussplatte kann aus einem halbsteifen Material bestehen, das Verwindungen zulässt. Das halbsteife Material kann dasselbe sein wie das der Drehplatte. Um zu verhindern, dass Verwindungen im an die Fuge angrenzenden Bereich auftreten, kann parallel zur Fuge eine Verstärkungsleiste vorgesehen sein.

Die Fuge umfasst vorzugsweise einen ersten Abschnitt, in dem die Fuge sich gradlinig vom seitlichen Rand in Richtung der Mittelachse der Übergangsplattform erstreckt. Dieser Abschnitt kann so ausgerichtet sein, dass das äußere Ende einen größeren Abstand zur Drehplatte hat als das innere Ende. Der erste Abschnitt kann mit der Mittelachse einen Winkel zwischen 45° und 90°, vorzugsweise zwischen 60° und 85 ° einschließen. Der erste Abschnitt erstreckt sich vorzugsweise über mindestens 50%, weiter vorzugsweise mindestens 70%, weiter vorzugsweise mindestens 80% der Strecke vom seitlichen Rand bis zur Mittelachse der Übergangsplattform.

Die Fuge kann ferner einen zweiten Abschnitt umfassen, der sich im Wesentlichen parallel zur Längsachse erstreckt. Die Fuge kann sich bis an das Scharnier zwischen der Drehplatte und der Anschlussplatte heran erstrecken, so dass die Anschlussplatte von der Fuge in einen Hauptteil und einen Plattenausschnitt unterteilt wird.

Auch im zweiten Abschnitt der Fuge kann ein Federblech für die Fugenverbindung vorgesehen sein. Um eine größere Bewegungsfreiheit zu erlauben, kann der Abstand zwischen Fuge und Befestigungen im zweiten Abschnitt größer sein als im ersten Abschnitt der Fuge. In einer vorteilhaften Ausführungsform erstreckt sich das Federblech über die Fuge hinweg bis an das Scharnier heran. Zu beiden Seiten der Fuge kann das Federblech - z.B. mittels Nieten - an der Anschlussplatte befestigt sein.

Die Erfindung betrifft ferner ein Fahrzeuggelenksystem mit einem zwischen zwei Wagen eines Fahrzeugs angeordneten Fahrzeuggelenk, bei dem oberhalb des Fahrzeuggelenks eine Übergangsplattform mit einer Neigung in Längsrichtung angeordnet ist. Die Neigung kann beispielsweise zwischen 4° und 10° gegenüber der Horizontalen liegen. Die Anschlussplatte kann eine drehfeste Verbindung mit einem ersten Wagen aufweisen, so dass die Anschlussplatte unabhängig vom Zustand des Fahrzeuggelenks immer in Verlängerung des ersten Wagens liegt. Gegenüber dem zweiten Wagen ist die Übergangsplattform drehbar gelagert, so dass der zweite Wagen sich bei einer Drehbewegung im Fahrzeuggelenk um die Drehplatte herumdreht. Die Übergangsplattform ist vorzugsweise mit beiden Wagen verwindungsstarr verbunden. Es verwindet sich also nicht die Abschlusskante der Übergangsplattform relativ zum angrenzenden Wagen, sondern die Verwindung wird in der Übergangsplattform aufgenommen. Damit die Übergangsplattform die Last einer oder mehrerer Personen aufnehmen kann, kann sie sich auf dem Fahrzeuggelenk abstützen.

Bei Nickbewegungen im Fahrzeuggelenk kann sich der Abstand der an die Übergangsplattform angrenzenden Wagen ändern. Um solche Abstandsänderungen aufnehmen zu können, ist die Übergangsplattform vorzugsweise mit mindestens einem Wagen so verbunden, dass eine Relativbewegung in Längsrichtung möglich ist. In einer vorteilhaften Ausführungsform ist das Drehlager so ausgelegt, dass es außer der Drehbewegung auch eine Längsverschiebung relativ zu der Drehplatte zulässt. In vertikaler Richtung hingegen bietet das Drehlager vorzugsweise eine definierte Führung für die Drehplatte, so dass eine zwischen den Wagen bestehende Verwindung über das Drehlager auf die Drehplatte übertragen werden kann.

Das Scharnier zwischen der Anschlussplatte und der Drehplatte dient dazu, Nickbewegungen im Fahrzeuggelenk auszugleichen. Je nachdem, ob die Nickbewegung aus einer Fahrt über eine Kuppe oder durch eine Senke resultiert, knickt die Übergangsplattform in dem Scharnier nach oben oder nach unten ein. Die Übergangsplattform ist vorzugsweise so eingerichtet, dass die Anschlussplatte und die Drehplatte in einer Ebene liegen, wenn das Fahrzeug im Normalzustand ist. Im Normalzustand steht das Fahrzeug gerade auf einer ebenen Fläche.

Die Erfindung wird nachfolgend unter Bezugnahme auf die beigefügten Zeichnungen anhand einer vorteilhaften Ausführungsform beispielhaft beschrieben. Es zeigen:
- Fig. 1:: eine Straßenbahn in Seitenansicht;
- Fig. 2:: eine schematische Darstellung eines erfindungsgemäßen Fahrzeuggelenkes in Seitenansicht;
- Fig. 3:: eine erfindungsgemäße Übergangsplattform in perspektivischer Darstellung;
- Fig. 4:: die Übergangsplattform aus Fig. 3 in Draufsicht;
- Fig. 5:: einen Schnitt entlang der Linie R - R in Fig. 4; und
- Fig. 6 und 7:: die Ansicht aus Fig. 4 bei anderen Ausführungsformen der Erfindung.

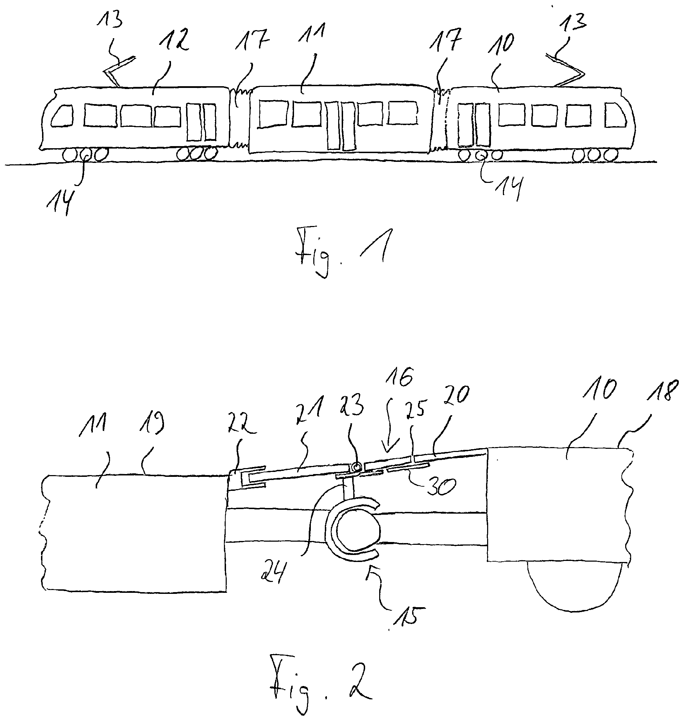

Eine Straßenbahn in Fig. 1 umfasst einen Vorderwagen 10, einen Mittelwagen 11 und einen Hinterwagen 12. Der Vorderwagen 10 und der Hinterwagen 12 sind als Triebwagen ausgebildet, die mit Stromabnehmern 13 elektrische Energie aus einer Oberleitung abgreifen und nicht dargestellten Antriebsmotoren zuführen. Die Antriebsmotoren treiben Räder 14 der Straßenbahn an.

Der Vorderwagen 10 und der Hinterwagen 12 sind jeweils über ein in Fig. 1 nicht sichtbares Fahrzeuggelenk 15 mit dem Mittelwagen 11 verbunden. Der Mittelwagen 11 hat keine Räder, sondern wird über die Fahrzeuggelenke 15 von dem Vorderwagen 10 und dem Hinterwagen 12 getragen. Im Vorderwagen 10 und im Hinterwagen 12 ist der Boden 18, auf dem die Passagiere stehen, wegen der darunter liegenden Räder 14 in einigem Abstand zum Boden angeordnet. Wenn ein Passagier vom Gehweg aus in den Vorderwagen 10 oder den Hinterwagen 12 einsteigt, muss er einen Höhenunterschied überwinden. Der Boden 19 des Mittelwagens 11 ist im Vergleich zum Boden 18 des Vorderwagens 10 und des Hinterwagens 12 abgesenkt. Ein Passagier kann vom Gehweg aus in den Mittelwagen 11 einsteigen, ohne dass ein nennenswerter Höhenunterschied überwunden werden müsste.

Zwischen den Wagen bestehen Durchgänge, die die Passagiere auch während der Fahrt durchqueren können. Die Durchgänge sind mit Faltenbälgen 17 umgeben, durch die die Passagiere vor Umgebungseinflüssen geschützt werden.

In Fig. 2 ist das Fahrzeuggelenk 15 zwischen dem Vorderwagen 10 und dem Mittelwagen 11 gezeigt. Das Fahrzeuggelenk 15 ist so ausgebildet, dass es Drehbewegungen, Nickbewegungen und Wankbewegungen zwischen dem Vorderwagen 10 und dem Mittelwagen 11 erlaubt. Oberhalb des Fahrzeuggelenks 15 ist eine Übergangsplattform 16 ausgebildet, auf der die Passagiere sich beim Durchqueren des Durchgangs bewegen. Die Übergangsplattform 16 ist in Längsrichtung geneigt über dem Fahrzeuggelenk 15 angeordnet, wobei die Neigung gegenüber der Horizontalen ungefähr 6° beträgt. Die Übergangsplattform 16 kann dadurch mit einem Ende mit dem Boden 18 des Vorderwagens 10 und mit dem anderen Ende mit dem Boden 19 des Mittelwagens 11 abschließen.

Die Übergangsplattform 16 umfasst einen vorderen Teil, der als Anschlussplatte 20 bezeichnet wird, und einen hinteren Teil in Form einer Drehplatte 21. Die Anschlussplatte 20 und die Drehplatte 21 sind über ein in Querrichtung ausgerichtetes Scharnier 23 verbunden. Das Scharnier 23 ist über eine Stütze 24 auf dem Fahrzeuggelenk 15 abgestützt. Aufgrund der Stütze ist die Übergangsplattform 16 so belastbar, dass Passagiere auf ihr stehen können. Die Übergangsplattform 16 ist auf ihrer Oberseite mit einer Struktur versehen, um einem Ausrutschen der Passagiere entgegenzuwirken.

Die Anschlussplatte 20 ist fest mit dem Vorderwagen 10 verbunden. Insbesondere ist eine Drehbewegung zwischen dem Vorderwagen 10 und der Anschlussplatte 20 ausgeschlossen, so dass die Anschlussplatte 20 immer in Verlängerung des Vorderwagens 10 liegt. Die Drehplatte 21 ist drehbar gegenüber dem Mittelwagen 11 gelagert. Wenn also die Straßenbahn in der Ebene um eine Kurve fährt und damit in dem Fahrzeuggelenk 15 eine Drehbewegung stattfindet, so dreht sich der Mittelwagen 11 um die Drehplatte 21 herum. Der hintere Abschluss der Drehplatte 21 hat dazu die Form eines Kreisbogens, der in einem mit dem Mittelwagen 11 verbundenen Drehlager 22 geführt ist. Das Drehlager 22 hat ebenfalls eine kreisbogenförmige Kontur, die an die Drehplatte 21 angepasst ist. Das Drehlager 22 umgreift den hinteren Abschluss der Drehplatte 21 von oben und von unten, so dass die Drehplatte 21 in vertikaler Richtung definiert geführt ist. Außer der Drehbewegung entlang der kreisbogenförmigen Kontur ist auch in Längsrichtung eine Relativbewegung zwischen der Drehplatte 21 und dem Drehlager 22 möglich.

Die Relativbewegung in Längsrichtung zwischen der Drehplatte 21 und dem Drehlager 22 trägt dazu bei, Nickbewegungen zwischen den Fahrzeugen auszugleichen. Nickbewegungen in dem Fahrzeuggelenk 15 entstehen, wenn die Straßenbahn über eine Kuppe oder durch eine Senke fährt. In der Übergangsplattform 16 führt die Nickbewegung zu einem Einknicken entlang dem Scharnier 23. Die Drehplatte 21 und die Anschlussplatte 20 stehen dann unter einem Winkel zueinander. Zusätzlich verschiebt sich die Drehplatte 21 in dem Drehlager 22 in Längsrichtung, um die mit der Knickbewegung verbundene Abstandsänderung zwischen dem Boden 18 des Vorderwagens 10 und dem Boden 19 des Mittelwagens 11 auszugleichen.

Die Drehbewegung, wenn die Straßenbahn um eine Kurve fährt, findet in der horizontalen Ebene statt (die Achse der Drehbewegung ist also senkrecht). Wenn das Drehlager 22 sich in einer horizontalen Ebene relativ zu der Übergangsplattform 16 bewegt, kann die Übergangsplattform 16 diese Bewegung aufgrund seiner Neigung in Längsrichtung nur durch eine Verwindung aufnehmen. Die Verwindung verstärkt sich gegebenenfalls, wenn gleichzeitig mit der Drehbewegung eine Wankbewegung zwischen den Wagen 10, 11 stattfindet, also eine Relativbewegung um die horizontale Längsachse. Die erfindungsgemäße Übergangsplattform 16 ist so gestaltet, dass sie die Verwindung in vorteilhafter Weise aufnehmen kann.

Dazu besteht zunächst die Drehplatte 21 aus einem halbsteifen Material. Die Drehplatte 21 ist also einerseits stabil genug, dass Personen auf ihr stehen können. Andererseits ist die Drehplatte 21 so flexibel, dass sie einen Teil der von der Übergangsplattform 16 aufzunehmenden Verwindung ausgleichen kann. Wenn also das Drehlager 22 sich in einer horizontalen Ebene relativ zu der Drehplatte 21 bewegt, so führt dies dazu, dass die hintere Abschlusskante der Drehplatte 21 nicht mehr parallel zu dem Scharnier 23 ist, sondern um eine Längsachse verschwenkt ist.

Welches Material halbsteif im Sinne der Erfindung ist, hängt von der Auslegung der Übergangsplattform ab und muss deswegen bei der Konstruktion der Übergangsplattform jeweils geeignet ausgewählt werden. Hat die Übergangsplattform beispielsweise eine Gesamtlänge von ungefähr 120 cm und eine Gesamtbreite von ungefähr 150 cm, so kommt als halbsteifes Material für die Drehplatte eine Platte mit einer Stärke von 8 mm aus einer gängigen Aluminiumlegierung in Betracht.

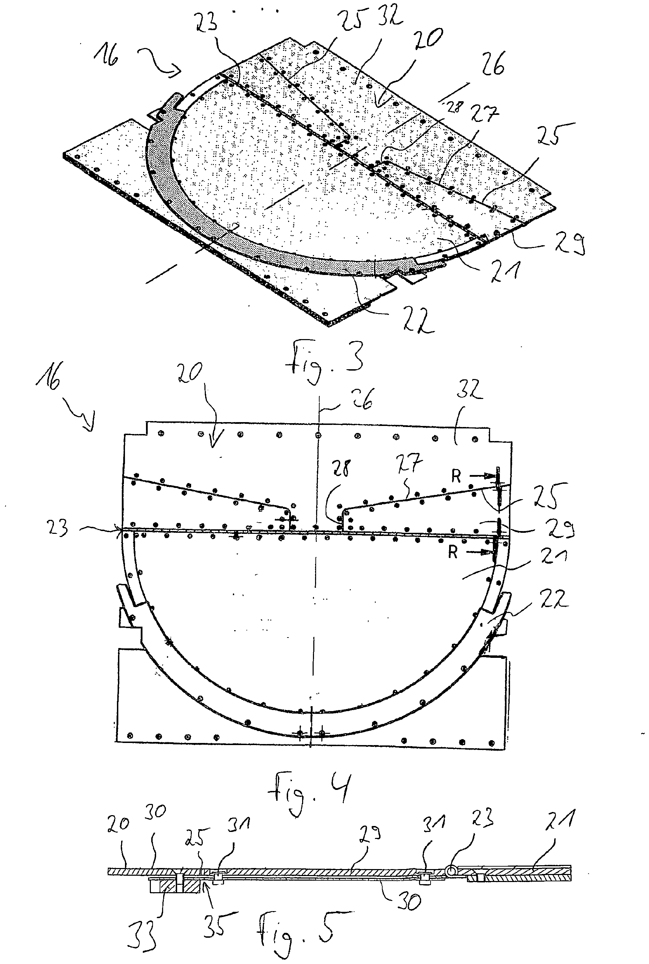

Außerdem sind, wie die Figuren 3 und 4 am besten zeigen, in der Anschlussplatte 20 der Übergangsplattform 16 Fugen 25 ausgebildet, über die ebenfalls ein Teil der Verwindung aufgenommen wird. Die Fugen 25 erstrecken sich von beiden Seiten der Anschlussplatte 20 in Richtung einer Mittelachse 26 der Anschlussplatte 20, wobei die äußeren Enden der Fugen 25 einen größeren Abstand zu der Drehplatte 21 haben als die inneren Enden. In einem ersten Abschnitt 27 erstrecken sich die Fugen 25 geradlinig bis in die Nähe der Mittelachse 26 der Übergangsplattform 16, jedoch nicht bis ganz an die Mittelachse 26 haben. Ein zweiter Abschnitt 28, der im Wesentlichen parallel zur Mittelachse 26 ausgerichtet ist, schließt sich an den ersten Abschnitt 27 an und erstreckt sich bis zum Scharnier 23. Die Fuge 25 trennt die Anschlussplatte 20 also in eine Hauptplatte 32 und einen Plattenausschnitt 29.

Unterhalb des Plattenausschnitts 29 ist ein in Fig. 5 gezeigtes Federblech 30 angeordnet, das über Nieten 31 mit dem Plattenausschnitt 29 und mit der Hauptplatte 32 verbunden ist. Das Federblech 30 ist als Fugenverbindung so gestaltet, dass es ein Abknicken zwischen der Hauptplatte 32 und dem Plattenausschnitt 29 entlang der Fuge 25 erlaubt. Im ersten Abschnitt 27 sind die Nieten 31 auf beiden Seiten in unmittelbarer Nähe der Fuge 25 angeordnet. Im zweiten Abschnitt 28 haben die Nieten 31 einen vergrößerten Abstand zu der Fuge 25, um in diesem Bereich ein etwas höheres Maß an Bewegungsfreiheit zuzulassen.

An der Fuge 25 besteht kein Abstand zwischen dem Plattenausschnitt 29 und der Hauptplatte 32, sondern die beiden Teile liegen bei ebener Übergangsplattform 16 direkt aneinander an. Damit besteht ein Anschlag 35, der die Bewegungsfreiheit zwischen dem Plattenausschnitt 29 und der Hauptplatte 32 einschränkt. Betrachtet man die Fig. 5, so kann die Hauptplatte 30 wegen des Anschlages 35 relativ zu dem Plattenausschnitt 29 nur nach unten, nicht aber nach oben abknicken. Durch den Anschlag 35 wird verhindert, dass sich die Übergangsplattform 16 nach unten durchbiegen kann, wenn eine Person im Bereich der Fuge 25 steht.

Die Anschlussplatte 20 besteht in diesem Ausführungsbeispiel aus demselben halbsteifen Material wie die Drehplatte 21. Um zu verhindern, dass sich die Anschlussplatte 20 im Bereich der Fuge 25 verwindet, ist unterhalb der Anschlussplatte 20 parallel zum ersten Abschnitt 27 der Fuge 25 eine Verstärkungsleiste 33 angebracht.

Verwindet sich nun die Übergangsplattform 16 aufgrund einer Drehbewegung in dem Fahrzeuggelenk 15, so wird wie oben dargelegt ein Teil der Verwindung von der halbsteifen Drehplatte 21 aufgenommen. In der Anschlussplatte 20 führen die Verwindungskräfte dazu, dass die Anschlussplatte 20 entlang der einen Fuge 25 nach oben und entlang der anderen Fuge 25 nach unten einknicken möchte. Das Einknicken nach oben wird wie dargelegt durch den Anschlag 35 verhindert. Es findet also lediglich auf der anderen Seite ein Einknicken nach unten statt. Mit der Kombination aus einer Verwindung in der Drehplatte 21 und dem Einknicken entlang der Fuge 25 kann die Übergangsplattform 16 alle im Betrieb der Straßenbahn auftretenden Verwindungen aufnehmen. Durch die erfindungsgemäße Fugenverbindung wird dies möglich, ohne dass zwischen den Komponenten der Übergangsplattform 16 ein Ausgleich in Höhenrichtung oder in Längsrichtung erforderlich wäre. Die Verwindungen können von der Übergangsplattform 16 also aufgenommen werden, ohne dass Absätze oder Spalten auftreten, an denen die Passagiere stolpern könnten.

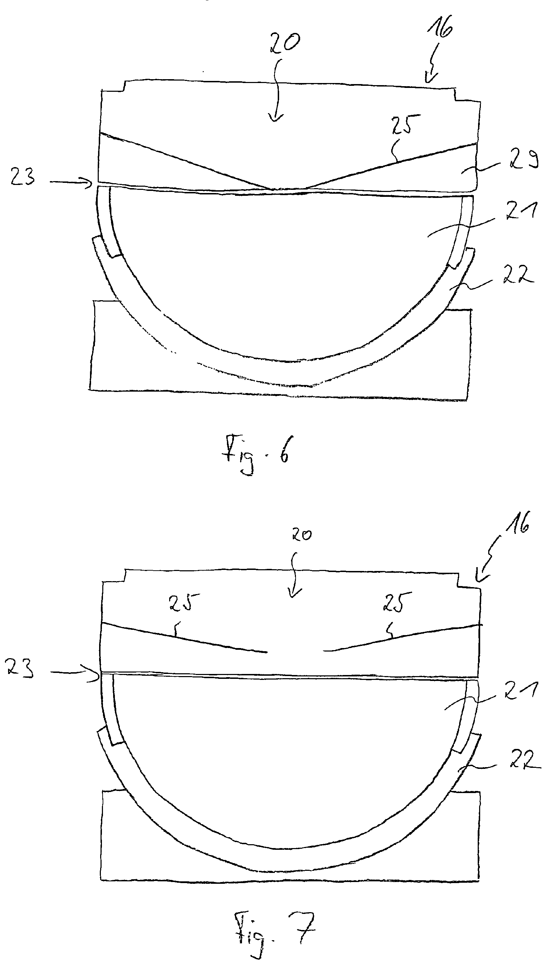

Die Figuren 6 und 7 zeigen zwei alternative Ausführungsformen der Erfindung, bei denen die Gestaltung der Fuge 25 abweicht. In Fig. 6 erstreckt sich die Fuge 25 geradlinig vom Rand der Anschlussplatte 20 bis an das Scharnier 23 heran und trennt 2 dreieckige Plattenausschnitte 29 aus der Anschlussplatte 20 heraus. In Fig. 7 endet die Fuge 25 mitten in der Anschlussplatte 20. Auch mit diesen Gestaltungen kann die Übergangsplattform 16 die im Betrieb der Straßenbahn auftretenden Verwindungen aufnehmen.

## Patentansprüche

1. Übergangsplattform, die dazu bestimmt ist, über einem Fahrzeuggelenk (15) mit einer Neigung in Längsrichtung angeordnet zu werden, umfassend eine Drehplatte (21) aus einem halbsteifen Material und eine Anschlussplatte (20), wobei die Drehplatte (21) und die Anschlussplatte (20) durch ein in Querrichtung ausgerichtetes Scharnier (23) miteinander verbunden sind, wobei die Anschlussplatte (20) eine sich vom seitlichen Rand in Richtung einer Mittelachse (26) erstreckende Fuge (25), die einen Bereich der Anschlussplatte definiert, in dem die Anschlussplatte leicht geknickt werden kann, mit einer verwindungsstarren Fugenverbindung aufweist.

2. Übergangsplattform nach Anspruch 1, **dadurch gekennzeichnet, dass** die Fugenverbindung von einem Federblech (30) gebildet ist.

3. Übergangsplattform nach Anspruch 1 oder 2, **dadurch gekennzeichnet, dass** die Fugenverbindung einen gegen Durchhängen wirksamen Anschlag (35) aufweist.

4. Übergangsplattform nach einem der Ansprüche 1 bis 3, **dadurch gekennzeichnet, dass** die Anschlussplatte (20) eine Verstärkungsleiste (33) aufweist, die sich parallel zu der Fuge (25) erstreckt.

5. Übergangsplattform nach einem der Ansprüche 1 bis 4, **dadurch gekennzeichnet, dass** die Fuge (25) einen Abschnitt aufweist, der sich geradlinig vom Rand der Anschlussplatte in Richtung der Mittelachse (26) erstreckt.

6. Übergangsplattform nach einem der Ansprüche 1 bis 5, **dadurch gekennzeichnet, dass** in der Anschlussplatte (20) durch die Fuge (25) ein Plattenausschnitt (29) von einem Hauptteil (32) abgetrennt wird.

7. Übergangsplattform nach Anspruch 6, **dadurch gekennzeichnet, dass** die Fuge (25) einen zweiten Abschnitt (28) aufweist, der im Wesentlichen parallel zur Mittelachse (26) ausgerichtet ist und der sich bis zu dem Scharnier (23) erstreckt.

8. Übergangsplattform nach Anspruch 7, **dadurch gekennzeichnet, dass** die Befestigung (31) zwischen der Anschlussplatte (20) und der Fugenverbindung im zweiten Abschnitt (28) der Fuge (25) von der Fuge (25) beabstandet ist.

9. Fahrzeuggelenksystem mit einem zwischen zwei Wagen (10, 11, 12) eines Fahrzeugs angeordneten Fahrzeuggelenk (15) und mit einer oberhalb des Fahrzeuggelenks (15) angeordneten Übergangsplattform (16), wobei die Übergangsplattform (16) in Längsrichtung geneigt ist, **dadurch gekennzeichnet, dass** die Übergangsplattform nach einem der Ansprüche 1 bis 8 ausgebildet ist.

10. Fahrzeuggelenksystem nach Anspruch 9, **dadurch gekennzeichnet, dass** die Anschlussplatte (20) eine drehfeste Verbindung mit einem ersten Wagen (10) aufweist und dass die Drehplatte (21) über ein Drehlager (22) mit einem zweiten Wagen verbunden ist.

11. Fahrzeuggelenksystem nach Anspruch 9 oder 10, **dadurch gekennzeichnet, dass** die Übergangsplattform (16) auf dem Fahrzeuggelenk (15) abgestützt ist.

12. Fahrzeuggelenksystem nach einem der Ansprüche 9 bis 11, **dadurch gekennzeichnet, dass** zwischen der Drehplatte (21) und dem Drehlager (22) eine Verschiebung in Längsrichtung möglich ist.

13. Fahrzeuggelenksystem nach einem der Ansprüche 9 bis 12, **dadurch gekennzeichnet, dass** die Anschlussplatte und die Drehplatte in einer Ebene liegen, wenn das Fahrzeug im Normalzustand ist.

## Claims

1. Bridging platform which is intended to be arranged above a vehicle articulation (15) with an inclination in the longitudinal direction, comprising a rotary plate (21) composed of a semirigid material, and a connection plate (20), wherein the rotary plate (21) and the connection plate (20) are connected to each other by a hinge (23) oriented in the transverse direction, wherein the connection plate (20) has a joint (25) which extends from the lateral edge in the direction of a centre axis (26) and defines a region of the connection plate, in which the connection plate can easily be buckled, with a distortion-resistant joint connection.

2. Bridging platform according to Claim 1, **characterized in that** the joint connection is formed by a spring sheet (30).

3. Bridging platform according to Claim 1 or 2, **characterized in that** the joint connection has a stop (35) which is effective against sagging.

4. Bridging platform according to one of Claims 1 to 3, **characterized in that** the connection plate (20) has a reinforcing strip (33) which extends parallel to the joint (25).

5. Bridging platform according to one of Claims 1 to 4, **characterized in that** the joint (25) has a portion which extends rectilinearly from the edge of the connection plate in the direction of the centre axis (26).

6. Bridging platform according to one of Claims 1 to 5, **characterized in that** a plate section (29) is separated from a main part (32) in the connection plate (20) by the joint (25).

7. Bridging platform according to Claim 6, **characterized in that** the joint (25) has a second portion (28) which is oriented substantially parallel to the centre axis (26) and which extends as far as the hinge (23).

8. Bridging platform according to Claim 7, **characterized in that** the fastening (31) between the connection plate (20) and the joint connection is spaced apart from the joint (25) in the second portion (28) of the joint (25).

9. Vehicle articulation system with a vehicle articulation (15) arranged between two coaches (10, 11, 12) of a vehicle, and with a bridging platform (16) arranged above the vehicle articulation (15), wherein the bridging platform (16) is inclined in the longitudinal direction, **characterized in that** the bridging platform is designed according to one of Claims 1 to 8.

10. Vehicle articulation system according to Claim 9, **characterized in that** the connection plate (20) is connected to a first coach (10) for rotation therewith, and **in that** the rotary plate (21) is connected to a second coach via a rotary bearing (22) .

11. Vehicle articulation system according to Claim 9 or 10, **characterized in that** the bridging platform (16) is supported on the vehicle articulation (15).

12. Vehicle articulation system according to one of Claims 9 to 11, **characterized in that** displacement in the longitudinal direction between the rotary plate (21) and the rotary bearing (22) is possible.

13. Vehicle articulation system according to one of Claims 9 to 12, **characterized in that** the connection plate and the rotary plate are located in a plane when the vehicle is in the normal state.

## Revendications

1. Plate-forme de transition qui est destinée à être placée au-dessus d'une articulation de véhicule (15) avec une inclinaison dans la direction longitudinale, comprenant un plateau rotatif (21) en une matière semi-rigide et un plateau de raccordement (20), le plateau rotatif (21) et le plateau de raccordement (20) étant assemblés l'un à l'autre par une charnière (23) orientée dans la direction transversale, le plateau de raccordement (20) comportant un joint (25) s'étendant du bord latéral dans la direction d'un axe médian (26), qui définit une zone du plateau de raccordement dans laquelle le plateau de raccordement peut être légèrement infléchi, doté d'un assemblage de joint rigide en torsion.

2. Plate-forme de transition selon la revendication 1, **caractérisée en ce que** l'assemblage de joint est formé d'une tôle résiliente (30).

3. Plate-forme de transition selon la revendication 1 ou 2, **caractérisée en ce que** l'assemblage de joint comporte une butée (35) agissant contre le fléchissement.

4. Plate-forme de transition selon l'une quelconque des revendications 1 à 3, **caractérisée en ce que** le plateau de raccordement (20) comporte une baguette de renfort (33) qui s'étend parallèlement au joint (25).

5. Plate-forme de transition selon l'une quelconque des revendications 1 à 4, **caractérisée en ce que** le joint (25) comporte un segment qui s'étend de manière rectiligne du bord du plateau de raccordement dans la direction de l'axe médian (26) .

6. Plate-forme de transition selon l'une quelconque des revendications 1 à 5, **caractérisée en ce que** dans le plateau de raccordement (20), une section du plateau (29) est séparée par le joint (25) d'une partie principale (32).

7. Plate-forme de transition selon la revendication 6, **caractérisée en ce que** le joint (25) comporte un deuxième segment (28) qui est orienté sensiblement parallèlement à l'axe médian (26) et qui s'étend jusqu'à la charnière (23).

8. Plate-forme de transition selon la revendication 7, **caractérisée en ce que** la fixation (31) entre le plateau de raccordement (20) et l'assemblage de joint dans le deuxième segment (28) du joint (25) est écartée du joint (25).

9. Système d'articulation de véhicule pourvu d'une articulation de véhicule (15) placée entre deux wagons (10, 11, 12) d'un véhicule et pourvu d'une plate-forme de transition (16) placée au-dessus de l'articulation de véhicule (15), la plate-forme de transition (16) étant inclinée dans la direction longitudinale, **caractérisé en ce que** la plate-forme de transition est réalisée selon l'une quelconque des revendications 1 à 8.

10. Système d'articulation de véhicule selon la revendication 9, **caractérisé en ce que** le plateau de raccordement (20) comporte un assemblage solidaire en rotation avec un premier wagon (10) et **en ce que** le plateau rotatif (21) est relié avec un deuxième wagon par l'intermédiaire d'un pivot (22).

11. Système d'articulation de véhicule selon la revendication 9 ou 10, **caractérisé en ce que** la plate-forme de transition (16) est appuyée sur l'articulation de véhicule (15).

12. Système d'articulation de véhicule selon l'une quelconque des revendications 9 à 11, **caractérisé en ce qu'**entre le plateau rotatif (21) et le pivot (22), un déplacement dans la direction longitudinale est possible.

13. Système d'articulation de véhicule selon l'une quelconque des revendications 9 à 12, **caractérisé en ce que** le plateau de raccordement et le plateau rotatif se situent dans un plan, lorsque le véhicule est dans l'état normal.
